# EUROPÄISCHE PATENTSCHRIFT

(11) **EP 3 295 646 B1**
(45) Veröffentlichungstag und Bekanntmachung des Hinweises auf die Patenterteilung: **20.02.2019**
(21) Anmeldenummer: 16741872.2
(22) Anmeldetag: 27.06.2016
(51) Int. Cl.: H04L 29/06, H04W 12/10, H04W 4/00, H04L 9/08, H04L 9/32, H04L 29/08, G06F 17/30

(54) **PRÜFUNG EINER KONSISTENZ ZWISCHEN REFERENZDATEN EINES FERTIGUNGSOBJEKTES UND DATEN EINES DIGITALEN ZWILLINGS DES FERTIGUNGSOBJEKTES**
EXAMINING A CONSISTENCY BETWEEN REFERENCE DATA OF A PRODUCTION OBJECT AND DATA OF A DIGITAL TWIN OF THE PRODUCTION OBJECT
VÉRIFICATION D'UN COHÉRENCE ENTRE DES DONNÉES DE RÉFÉRENCE D'UN OBJET DE FABRICATION ET DES DONNÉES D'UNE REPRÉSENTATION NUMÉRIQUE DUDIT OBJET DE FABRICATION

(30) Priorität: 17.09.2015 DE 102015217855
(43) Veröffentlichungstag der Anmeldung: 21.03.2018
(73) Patentinhaber: Siemens Aktiengesellschaft, 80333 München (DE)
(72) Erfinder: FISCHER, Kai, 85598 Baldham (DE); HEINTEL, Markus, 81377 München (DE)
(86) Internationale Anmeldenummer: PCT/EP2016/064785
(87) Internationale Veröffentlichungsnummer: WO 2017/045789

(56) Entgegenhaltungen:
- WO-A2-2007/056712
- US-A1- 2003 158 795
- US-A1- 2012 213 366

## Beschreibung

Die Erfindung betrifft ein Verfahren, ein zugehörigen Computerprogrammprodukt, eine Fertigungseinheit sowie eine Anordnung zur Prüfung einer Konsistenz zwischen Referenzdaten eines Fertigungsobjektes und Daten eines digitalen Zwillings des Fertigungsobjektes, wobei zwei getrennte Kommunikationskanäle genutzt werden.

In modernen Automatisierungsanlagen werden zur Steuerung von Fertigungsprozessen oder einzelnen Produktionsschritten IT-Systeme eingesetzt. Diese IT-Systeme kontrollieren den Fertigungsprozess basierend auf einem digitalen Abbild der Fertigungsanlage oder einem digitalen Abbild eines zu produzierenden Werkstücks. Das digitale Abbild wird auch digitaler Zwilling oder Digital Twin genannt. Der digitale Zwilling des Werkstücks wird während der Fertigung mit dem Zustand des Werkstücks synchronisiert. Der Einsatz von IT-Systemen in der Industrieautomatisierung erfordert angepasste Maßnahmen zur Gewährleistung der IT-Sicherheit. IT-Systeme mit deren zugrundeliegendem Kommunikationsnetzwerk sind oftmals leichter angreifbar. Insbesondere ist die Konsistenz zwischen physischer Welt und virtueller Repräsentation in Form des digitalen Zwillings entscheidend für einen sicheren Produktionsablauf. Daher sollen Manipulationen an einem Werkstück oder an seinem digitalen Zwilling erkennbar sein.

Es ist allgemein bekannt, eine eindeutige Referenz auf einem Werkstück oder einem Werkstückträger anzubringen, beispielsweise mittels eines passiven Markers wie eines Barcodes oder NFC-Chips. Diese Referenz kann von einer Fertigungsanlage ausgelesen werden und ermöglicht eine eindeutige Zuordnung des Werkstücks bzw. die Zuordnung zu seinem digitalen Zwilling. Es ist überdies bekannt, dass ein Werkstück selbst über IT-Fähigkeiten verfügt und einer Fertigungsanlage aktiv eine Referenz senden kann. Mit diesen Verfahren wird ungesichert eine Referenz des Werkstücks an eine bearbeitende Maschine übermittelt. Sobald ein Auslesen beispielsweise eines RFID-Chips möglich ist, kann eine ungesicherte Übertragung durchgeführt werden, auch durch nicht zu diesem Zweck vorgesehene Lesegeräte, die beispielsweise manipuliert sind. Zudem könnte ein Werkstück einen manipulierten Referenzwert übertragen.

Das Dokument US 2003/158795 A1 gehört zum Stand der Technik.

Das Vorsehen kryptographischer Verfahren zum Schutz des Referenzwertes erfordert einen aufwändigen Key Management Prozess, bei welchem gegebenenfalls durch jedes Werkstück einzeln Schlüsselmaterial ausgestellt und verwaltet werden muss. Bei einer Vielzahl von Werkstücken innerhalb einer Fertigungsanlage ist dieser Prozess komplex und verwaltungsintensiv.

Daher ist es Aufgabe der vorliegenden Erfindung, ein Verfahren, ein Computerprogrammprodukt hierfür, ein Fertigungsobjekt sowie eine Anordnung bereitzustellen, welche auf einfache Weise die Sicherheit bei der Verarbeitung von Daten eines digitalen Zwillings eines Fertigungsobjektes erhöhen.

Diese Aufgabe wird durch die Gegenstände der unabhängigen Ansprüche gelöst. Vorteilhafte Ausgestaltungen sind in den abhängigen Ansprüchen angegeben.

Die Erfindung betrifft ein Verfahren zur Prüfung einer Konsistenz zwischen Referenzdaten eines Fertigungsobjektes und Daten eines digitalen Zwillings des Fertigungsobjektes, wobei die Referenzdaten über einen ersten Kommunikationskanal und die Daten des digitalen Zwillings über einen zweiten Kommunikationskanal übertragen werden, und wobei eine erste Übertragung über den ersten Kommunikationskanal an eine physische Verfügbarkeit des Fertigungsobjektes innerhalb einer Fertigungsanlage gekoppelt ist und eine zweite Übertragung über den zweiten Kommunikationskanal an einen Zugriff auf ein Kommunikationsnetzwerk der Fertigungsanlage gekoppelt ist.

Unter einem Fertigungsobjekt wird beispielsweise ein Werkstück oder Werkstückträger verstanden, beispielsweise ein Werkstück, welches in einem Fertigungsprozess bearbeitet wird. Es kann sich um einen Herstellungsschritt innerhalb eines Veredelungsprozesses handeln oder um einen Zusammenbau mehrerer Werkstücke zu einem Produkt.

Die Referenzdaten des Fertigungsobjektes enthalten zumindest eine Information, die die Identifikation des Fertigungsobjektes ermöglicht. Beispielsweise ist eine Nummerierung der Fertigungsobjekte innerhalb einer Fertigungsanlage vorgesehen, welche jedes Werkstück oder jedes Objekt zur Bearbeitung eines Werkstückes eindeutig identifiziert. Die Referenzdaten können dafür einen Referenzwert enthalten, der speziell zu Zwecken der Identifizierung vorgesehen ist.

Auf dem digitalen Zwilling des Fertigungsobjektes ist beispielsweise der Fertigungsplan hinterlegt, nach welchem der Fertigungsprozess durchgeführt werden soll. Beispielsweise sind Statusinformationen zum Status des Fertigungsobjektes in aktueller Form auf dem Werkstück hinterlegt. Der digitale Zwilling spiegelt die momentan bestehende physische Anordnung in einer Fertigungsanlage oder einen Status einer Fertigungsanlage, beispielsweise eines Cyber Physical Production Systems, kurz CPPS. Dies ermöglicht eine Synchronisation und bidirektionale Wechselwirklung oder Absprache mit der digitalen Welt in einem PLM- oder Engineering System. Der digitale Zwilling enthält beispielsweise Informationen über die Kapazitäten oder Umgebungsbedingungen, Produktionsschritte oder Aufgaben innerhalb des Cyber Physical Production Systems. Beispielsweise wird ein Speicherinhalt nach jedem Fertigungsschritt aktualisiert, um den Status anzupassen.

Es sind zwei Kommunikationskanäle, ein erster Kommunikationskanal und ein zweiter Kommunikationskanal vorgesehen. Der erste Kommunikationskanal ist an eine physische Verfügbarkeit des Fertigungsobjektes innerhalb einer Fertigungsanlage gekoppelt. Beispielsweise ist der erste Kommunikationskanal nur aktiv oder nur nutzbar, falls sich das Fertigungsobjekt in einer bestimmten räumlichen Umgebung innerhalb der Fertigungsanlage aufhält. Somit beruht der erste Kommunikationskanal auf einer physischen Nähe des realen Werkstücks zu einem Wirkungsbereich des Kommunikationspartners. Dabei kann es sich beispielsweise um eine Fertigungseinheit handeln.

Der zweite Kommunikationskanal ist an einen Zugriff auf ein Kommunikationsnetzwerk der Fertigungsanlage gekoppelt. Beispielsweise kann der zweite Kommunikationskanal nur genutzt werden, falls eine Nutzung oder ein Zugang oder ein Zugriff auf ein IT-System der Fertigungsanlage möglich ist. Insbesondere ist ein solcher zweiter Kommunikationskanal über das Kommunikationsnetzwerk der Fertigungsanlage für eine Fertigungsanlage während eines Produktionsprozesses dauerhaft aktiviert und nutzbar. Beispielsweise kann eine Fertigungseinheit mit anderen Fertigungseinheiten der Fertigungsanlage permanent Daten austauschen. Es kann überdies der Zugriff auf das Kommunikationsnetzwerk an eine Authentisierung der Fertigungsanlage gekoppelt sein, so dass nur autorisierte Anfragen Zugriff erhalten. Die Sicherheit beruht also auf Absicherung des Kommunikationsnetzwerkes, beispielsweise durch kryptographische Schlüssel oder Zertifikate. Der erste Kommunikationskanal ist hingegen beispielsweise nur in vorgegebenen Zeitspannen nutzbar, in welchem sich das Werkstück oder das Fertigungsobjekt beispielsweise nahe genug oder mit einer passenden Ausrichtung in der Nähe einer Fertigungseinheit befindet. Hier wird also die Sicherheit durch die physische Verfügbarkeit des Werkstücks hergestellt.

Auf vorteilhafte Weise werden Daten, die das Fertigungsobjekt betreffen, somit über zwei unabhängige Wege in der Anlage verteilt. Dadurch, dass das Werkstück selbst Informationen tragen kann, kann eine Fertigungsmaschine Daten des physischen Werkstücks direkt auslesen und überdies Daten des digitalen Zwillings des Werkstücks über den zweiten Kommunikationskanal beispielsweise aus einem IT-Kommunikationsnetz auslesen. Die Verwendung zweier unabhängiger Kommunikationskanäle erhöht die Sicherheit der Daten des digitalen Zwillings, da ein Angreifer für einen erfolgreichen Angriff auf einen Fertigungsschritt zwei unabhängige Kommunikationskanäle gleichzeitig erfolgreich kompromittieren oder manipulieren muss. Beide Kommunikationskanäle sind vorteilhafterweise in einem digitalen Automatisierungssystem ohne notwendige Nachrüstung vorgesehen. Eine IT-Kommunikationsinfrastruktur, wie beispielsweise Profibus oder Industrial Ethernet, kann neben den üblichen Einsatzwecken auch zu Zwecken der Übertragung der Daten des digitalen Zwillings genutzt werden. Der physische Transport des Fertigungsobjektes bewirkt vorteilhafterweise automatisch, dass sich das Fertigungsobjekt gemäß dem Produktionsplan für bestimmte Zeiten in einem Wirkungsbereich einer Fertigungseinheit aufhält. Ein Kommunikationsweg, der auf physischer Nähe beruht, wie beispielsweise optische Kommunikationsverfahren oder Nahfeldkommunikationsverfahren, sind zum Auslesen von Referenzwerten vorgesehen.

Die Konsistenzprüfung zwischen Daten des physischen Werkstücks und Daten, die in einem digitalen Zwilling des Werkstücks gespeichert sind, sichert eine Integrität und/oder Authentizität einer der beiden Datensätze, sofern dem anderen vertraut werden kann. Somit sind Manipulationen von Daten des digitalen Abbildes im digitalen Zwilling oder Manipulationen am Werkstück oder Werkstückträger detektierbar. Ist einer der beiden Kommunikationskanäle geschützt bzw. das Werkstück oder der digitale Zwilling des Werkstücks geschützt, so kann die Konsistenzprüfung Auskunft über die Integrität des jeweils anderen Kanals oder Datensatzes geben.

Die Konsistenzprüfung erfolgt zu dem Zweck, im Falle einer Inkonsistenz reagieren zu können. Beispielsweise erfolgt ein Ausgeben eines Prüfergebnisses und nur im Falle einer bestätigten Konsistenz erfolgt daraufhin ein weiterer Schritt, beispielsweise eine Verarbeitung des Fertigungsobjektes durch die Fertigungseinheit. Beispielsweise ist eine Übertragung der Daten des digitalen Zwillings nur möglich in Fällen, in denen ein Prüfergebnis vorliegt, das die Konsistenz zwischen den Referenzdaten und den Daten des digitalen Zwillings belegt, so dass damit insbesondere auf eine Integrität der Daten des digitalen Zwillings geschlossen werden kann. Es erfolgt auf vorteilhafte Weise eine Kopplung der Daten des digitalen Zwillings mit einem spezifischen physikalischen Werkstück.

Gemäß einer Ausgestaltung beruht der erste Kommunikationskanal auf einer physischen Nähe und ist insbesondere für ein optisches Kommunikationsverfahren oder für ein Nahfeldkommunikationsverfahren ausgerichtet. Somit kommt es zu einer Übertragung der Referenzdaten von einem Fertigungsobjekt über den ersten Kommunikationskanal nur, falls beispielsweise der physische Abstand klein genug ist. Beispielsweise wird ein Nahfeldkommunikationsverfahren wie NFC, kurz für Near-Field-Communication, angewandt, welches für kurze Strecken von wenigen Zentimetern eine Datenübertragung ermöglicht. Somit ist nur in einem begrenzten räumlichen Bereich innerhalb der Fertigungsanlage die erfolgreiche Nutzung des ersten Kommunikationskanales möglich. Eine Datenübertragung von insbesondere manipulierten Referenzdaten eines anderen oder manipulierten Fertigungsobjektes, welches sich nicht in dem festgelegten räumlichen Gebiet innerhalb der Fertigungsanlage, insbesondere in einem Radius um die Fertigungseinheit, befindet, können somit auf vorteilhafte Weise nicht über den ersten Kommunikationskanal übermittelt werden.

Gemäß einer Ausgestaltung beruht der zweite Kommunikationskanal auf einer Kommunikationsinfrastruktur, insbesondere auf einer Profibus- oder Industrial Ethernet-Struktur. Somit können klassische Industriekommunikationsnetzwerke genutzt werden, welche insbesondere eine Kopplung zu einem Büronetzwerk aufweisen können.

Gemäß einer Ausgestaltung wird als Referenzdaten neben einem Referenzwert zusätzlich eine erste Prüfsumme über die Daten des digitalen Zwillings übertragen und es wird eine zweite Prüfsumme über die über den zweiten Kommunikationskanal übertragenen Daten des digitalen Zwillings gebildet und die zweite Prüfsumme mit der ersten Prüfsumme verglichen und auf Konsistenz hin geprüft. Insbesondere wird als Referenzwert ein Marker, z.B. in Form einer Seriennummer oder einer fertigungsanlageninternen Nummerierung übermittelt. Bei der ersten Prüfsumme über die Daten des digitalen Zwillings handelt es sich beispielsweise um einen Hash-Wert. Es wird eine Hash-Funktion auf die Daten des digitalen Zwillings angewandt und nur die Prüfsumme, aus welcher aufgrund der Eigenschaften von Einwegfunktionen nicht auf die Daten des digitalen Zwillings rückgeschlossen werden kann, sind auf dem Fertigungsobjekt hinterlegt. Beispielsweise werden der Referenzwert sowie die erste Prüfsumme der Daten des digitalen Zwillings von einem Prozessor einer Fertigungsanlage verarbeitet. In einer Variante ist der Referenzwert Bestandteil der Prüfsumme, das heißt es erfolgt eine Prüfsummenbildung über einen Datensatz aus den Daten des digitalen Zwillings verknüpft oder konkateniert mit dem Referenzwert.

Auf Basis der Referenz werden die Daten des digitalen Zwillings über den zweiten Kommunikationskanal angefordert. Beispielsweise sind diese auf einer zentralen Steuerungskomponente in einem Speicher hinterlegt. Beispielsweise führt der Prozessor auf Grundlage der über den zweiten Kommunikationskanal, z.B. über ein Industrial Ethernet-System, empfangenen Daten des digitalen Zwillings eine Prüfsummenbildung durch. Somit wird der Hash-Wert der Daten des digitalen Zwillings gebildet. Es handelt sich dabei um die zweite Prüfsumme. Diese beruht auf der Sicherheit des zweiten Kommunikationskanales bzw. der Unversehrtheit des Speichers. Es erfolgt ein Abgleich der beiden Prüfsummen. Sind diese beiden weitgehend identisch, beispielsweise nach Beachtung möglicher auftretender Übertragungsfehler, so liegt eine Konsistenz zwischen den Referenzdaten des Fertigungsobjektes und den Daten des digitalen Zwillings des Fertigungsobjektes vor. Es kann mit erhöhter Sicherheit davon ausgegangen werden, dass weder das Fertigungsobjekt selbst noch der digitale Zwilling manipuliert wurde. Somit ermöglicht das Verfahren einen Integritätsschutz der Daten des digitalen Zwillings.

Gemäß einer Ausgestaltung werden als Referenzdaten neben einem Referenzwert zusätzlich ein symmetrischer Schlüssel oder Informationen zur Generierung eines symmetrischen Schlüssels übertragen. Die Daten des digitalen Zwillings werden mit dem symmetrischen Schlüssel in verschlüsselter Form gespeichert und sind mit dem symmetrischen Schlüssel entschlüsselbar. Beispielsweise sind durch einen Prozessor einer Fertigungsmaschine der Referenzwert und der Schlüssel oder die Schlüsselinformationen über den ersten Kommunikationskanal empfangbar, sobald das Werkstück sich im Wirkungsbereich der Fertigungsmaschine befindet. Die Daten des digitalen Zwillings werden in verschlüsselter Form über den zweiten Kommunikationskanal von einem Speicher übertragen.

Nur falls das korrekte Schlüsselmaterial auf der Fertigungsmaschine vorliegt, können die Daten des digitalen Zwillings entschlüsselt werden. Ein Angreifer, welcher die Daten des digitalen Zwillings manipulieren möchte, müsste Kenntnis über den symmetrischen Schlüssel haben, um innerhalb des Kommunikationsnetzwerkes die Daten des digitalen Zwillings in unverschlüsselter Form verfügbar zu haben und dann gegebenenfalls zu manipulieren. Ein Austausch von verschlüsselten Daten durch einen Angreifer und eine Übertragung der manipulierten Daten kann beispielsweise unter Verwendung zusätzlicher Maßnahmen, beispielsweise vorteilhaft bei Verwendung von authenticated encryption, auffallen.

Überdies wird durch die vorgeschlagene Ausführungsform auf vorteilhafte Weise ein Auslesen der Daten des digitalen Zwillings auf Seiten des Kommunikationsnetzwerkes verhindert. Die Daten liegen zu keiner Zeit in unverschlüsselter Form vor. Beispielsweise liegen die Daten in unverschlüsselter Form erst auf der Fertigungseinheit vor und auch erst, nachdem der symmetrische Schlüssel über den ersten Kommunikationskanal ermittelt werden konnte. Vertrauliche Daten im digitalen Zwilling sind auf vorteilhafte Weise erst lesbar, wenn eine Fertigungseinheit oder Maschine physischen Zugriff auf das Werkstück hat. Ebenso kann die Fertigungseinheit selbst erst dann Zugriff auf die Daten des Zwillings in unverschlüsselter Form bekommen und diese verarbeiten, wenn sie physischen Zugriff auf das Werkstück hat. Insbesondere können auf vorteilhafte Weise vertrauliche Prozessanweisungen innerhalb der Daten des digitalen Zwillings verschlüsselt werden. Weniger kritische Daten können unverschlüsselt vorliegen, um den Rechenaufwand zu reduzieren. Eine Schlüsselvereinbarung oder das Verteilen des Schlüsselmaterials kann beispielsweise in einer vertraulichen Umgebung während einer Initialisierungsphase vorgenommen werden.

Gemäß einer Ausgestaltung werden als Referenzdaten neben einem Referenzwert zusätzlich ein symmetrischer Schlüssel oder Informationen zur Generierung eines symmetrischen Schlüssels übertragen. Neben den Daten des digitalen Zwillings wird zusätzlich ein erster Nachrichtenauthentifizierungscode über die Daten des digitalen Zwillings übertragen und ein zweiter Nachrichtenauthentifizierungscode über die über den zweiten Kommunikationskanal übertragenen Daten des digitalen Zwillings mittels des symmetrischen Schlüssels gebildet. Der erste Nachrichtenauthentifizierungscode wird mit dem zweiten Nachrichtenauthentifizierungscode verglichen und auf Konsistenz hin geprüft. In diesem Szenario liegen zwar die Daten des digitalen Zwillings auch in unverschlüsselter Form innerhalb des Kommunikationsnetzwerkes vor, dafür entfällt ein Entschlüsselungsalgorithmus beispielsweise auf einem Prozessor der Fertigungseinheit und es kann sattdessen eine einfache Bildung eines Nachrichtenauthentifizierungscodes, beispielsweise eines Message Authentication Codes, kurz MAC genannt, durchgeführt werden. Es können auch sogenannte keyed-Hash-Funktionen verwendet werden, die eine Prüfsumme unter Einbeziehung des symmetrischen Schlüssels bilden.

Auf vorteilhafte Weise wird ein Integritätsschutz der Daten des digitalen Zwillings mittels der MAC-Prüfsumme oder der keyed-Hash-Prüfsumme ermöglicht. Es ist so sichergestellt, dass die Daten des digitalen Zwillings nach einer initialen Hinterlegung der Prüfsumme, beispielsweise auf dem Speicher, auf den das Kommunikationsnetzwerk zugreift, nicht verändert oder manipuliert wurden bzw. Veränderungen der Daten im digitalen Zwilling nur durch autorisierte Entitäten erfolgte, die den zugehörigen Schlüssel kennen. Da zunächst ein erfolgreicher Abgleich zwischen dem ersten Nachrichtenauthentifizierungscode und dem zweiten Nachrichtenauthentifizierungscode erfolgen muss, bevor beispielsweise eine Weiterverarbeitung der Daten des digitalen Zwillings möglich ist, ist zugleich sichergestellt, dass auch die Übertragung über den ersten Kommunikationskanal, welche das Schlüsselmaterial bereitstellt, erfolgreich durchgeführt werden konnte. Da über das physische Werkstück und den ersten Kommunikationskanal also der passende Schlüssel oder das passende Schlüsselmaterial geliefert werden muss, um einen mit dem ersten Nachrichtenauthentifizierungscode übereinstimmende zweiten Nachrichtenauthentifizierungscode ermitteln zu können, wird die Authentizität des Fertigungsobjektes nachgewiesen. Eine erfolgreiche Konsistenzprüfung kann wiederum Voraussetzung für weitere Fertigungsschritte oder Freigaben oder Zugriffserlaubnis im Fertigungsverfahren sein.

Die Mechanismen zum Schutz der Vertraulichkeit und der Sicherstellung der Integrität bzw. Authentizität können vorteilhaft kombiniert werden.

Gemäß einer Ausgestaltung sind die Informationen als Startwert ausgebildet und geeignet zur Generierung des symmetrischen Schlüssels mittels einer Schlüsselableitungsfunktion. Es wird also entweder direkt ein symmetrischer Schlüssel oder ein Input für eine Schlüsselableitung ergänzt. Beispielsweise werden zur Schlüsselableitung sogenannte Key Derivation Functions verwendet.

Gemäß einer Weiterbildung werden ein fertigungsobjektspezifischer Schlüssel oder fertigungsobjektspezifische Informationen durch Einbeziehen fertigungsobjektspezifischer Merkmale in eine Schlüsselableitungsfunktion bereitgestellt, wobei die fertigungsobjektspezifischen Merkmale insbesondere mittels des Referenzwertes oder mittels einer physikalisch unklonbaren Funktion erzeugt werden. Somit kann ein je Fertigungsobjekt oder Werkstück individueller Schlüssel generiert werden oder übertragen werden. Somit sind die Daten des digitalen Zwillings nur entschlüsselbar oder eine MAC Prüfsumme darüber nur verifizierbar, falls der fertigungsobjektspezifisch passende Schlüssel mit Hilfe des ersten Kommunikationskanals verfügbar gemacht wurde. Beispielsweise kann eine optische physisch unklonbare Funktion, kurz PUF, eingesetzt werden, die die individuelle Oberflächenstruktur eines Werkstücks erfasst. So sind Daten des digitalen Zwillings auf vorteilhafte Weise nur entschlüsselbar, falls von dem passenden Fertigungsobjekt, das über die physikalisch unklonbare Funktion eindeutig charakterisiert ist, die Referenzdaten erfolgreich über den ersten Kommunikationskanal übertragen wurden.

Gemäß einer Ausgestaltung wird als Referenzdaten neben einem Referenzwert zusätzlich ein Eingangswert einer Einwegfunktion übertragen und die Daten des digitalen Zwillings über den zweiten Kommunikationskanal übertragen, falls ein Ergebniswert der Einwegfunktion über den Eingangswert mit einem gespeicherten Ergebniswert übereinstimmt. Es soll beispielsweise gelten, dass ein Ergebniswert E durch das Anwenden einer Hash-Funktion auf einen Eingangswert P erhältlich ist. Den Referenzdaten wird der Eingangswert P beigefügt. Ein Zugriff auf die Daten des digitalen Zwillings über den zweiten Kommunikationskanal soll nur möglich sein, wenn eine Hash-Wertbildung des passenden Ergebniswertes E mittels Anwendens der Hash-Funktion auf den korrekten Eingangswert P nachgewiesen werden kann. Dieser Nachweis erfolgt auf vorteilhafte Weise vor Übertragung der Daten des digitalen Zwillings, so dass die Kenntnis des Eingangswertes als Autorisierungsmerkmal genutzt wird. Alternativ kann eine Prüfung im Nachhinein erfolgen und beispielsweise eine Alarmmeldung bewirken. Dafür liegt an geeigneter Stelle ein gespeicherter korrekter Ergebniswert vor. Insbesondere ist der korrekte Ergebniswert E Bestandteil der Daten des digitalen Zwillings. Es wird die Konsistenz zwischen den Referenzdaten inklusive Eingangswert P und den Daten des digitalen Zwillings inklusive Ergebniswert E geprüft. Wiederum ist ein Zugriff auf die Daten des digitalen Zwillings durch eine Fertigungseinheit nur möglich, falls auch die physische Nähe zu dem Fertigungsobjekt besteht, da Kenntnis über den Eingangswert P erlangt werden muss. Außerdem kann je nach Ausgestaltung des Eingangswertes eine Manipulation der Daten auf dem Werkstück oder Fertigungsobjekt oder des Fertigungsobjektes selbst erkennbar sein, da dann der korrekte Eingangswert in der Regel nicht vorliegen wird. Für Fälle, in denen der korrekte Eingangswert trotz Manipulation der Daten oder des Werkstücks vorliegt, kann zusätzlich ein Abgleich der Daten mit den Referenzdaten erfolgen, um eine Abweichung und so eine Manipulation erkennen zu können.

Die Konsistenzprüfung kann je nach Ausgestaltung ein direktes Abgleichen zweier Datensätze, insbesondere zweier Prüfsummen, beinhalten oder eine Plausibilitätsprüfung eines Referenzwertes, der aus entschlüsselten Referenzdaten gewonnen wird, oder eine Prüfung auf Übereinstimmung zweier verwendeter Schlüssel oder eine Abfrage eines Geheimnisses.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie beispielsweise ein Computerprogrammmittel, kann beispielsweise als Speichermedium, wie beispielsweise Speicherkarte, USB-Stick, CD-ROM, DVD oder auch in Form einer herunterladbaren Datei von einem Server in ein Netzwerk bereitgestellt oder geliefert werden. Dies kann z.B. in einem drahtlosen Kommunikationsnetzwerk durch die Übertragung einer entsprechenden Datei mit dem Computerprogrammprodukt oder dem Computerprogrammmittel erfolgen. Als programmgesteuerte Einrichtung kommt insbesondere eine Steuereinrichtung, wie z.B. ein Mikroprozessor, in Frage.

Die Erfindung betrifft ferner eine Fertigungseinheit aufweisend eine erste Schnittstelle zu einem Fertigungsobjekt, wobei über die erste Schnittstelle Referenzdaten des Fertigungsobjektes empfangbar sind, wobei eine erste Übertragung der Referenzdaten an eine physische Nähe zwischen Fertigungseinheit und Fertigungsobjekt gekoppelt ist, sowie eine zweite Schnittstelle zu einem Kommunikationsnetzwerk einer Fertigungsanlage, wobei über die zweite Schnittstelle Daten eines digitalen Zwillings des Fertigungsobjektes empfangbar sind, wobei eine zweite Übertragung der Daten des digitalen Zwillings an einen Zugriff auf das Kommunikationsnetzwerk gekoppelt ist, sowie eine Prüfeinheit zum Prüfen einer Konsistenz zwischen Referenzdaten des Fertigungsobjektes und den Daten des digitalen Zwillings des Fertigungsobjektes.

Die Erfindung betrifft ferner eine Anordnung aus Fertigungsobjekt, Fertigungseinheit, Speichereinheit und Prozessor mit einem ersten Kommunikationskanal zwischen Fertigungsobjekt und Fertigungseinheit beruhend auf einer physischen Nähe zwischen Fertigungseinheit und Fertigungsobjekt zur Übertragung von Referenzdaten des Fertigungsobjektes und mit einem zweiten Kommunikationskanal eines Kommunikationsnetzwerkes zwischen Fertigungseinheit und Speichereinheit zur Übertragung von Daten eines digitalen Zwilling des Fertigungsobjektes, wobei der Prozessor geeignet ist zur Prüfung einer Konsistenz zwischen den Referenzdaten und den Daten des digitalen Zwillings.

Gemäß einer Ausgestaltung ist der Prozessor in die Fertigungseinheit integriert oder wird durch einen Cloud-Service bereitgestellt oder ist in eine Steuerungseinheit einer Fertigungsanlage integriert, insbesondere gemeinsam mit der Speichereinheit.

Die Erfindung wird nachfolgend anhand eines Ausführungsbeispiels mit Hilfe der Figuren näher erläutert. Es zeigen:
- Figur 1: schematische Darstellung eines Werkstückes beim Durchlaufen eines Ausschnittes einer Fertigungsstraße gemäß dem Ausführungsbeispiel der Erfindung;
- Figur 2: schematische Darstellung der Kommunikationsschritte gemäß einer ersten Variante des Ausführungsbeispiels;
- Figur 3: schematische Darstellung der Kommunikationsschritte gemäß einer zweiten Variante des Ausführungsbeispiels;
- Figur 4: schematische Darstellung der Kommunikationsschritte gemäß einer dritten Variante des Ausführungsbeispiels;
- Figur 5: schematische Darstellung der Kommunikationsschritte gemäß einer vierten Variante des Ausführungsbeispiels.

In den Figuren sind funktionsgleiche Elemente mit denselben Bezugszeichen versehen, sofern nichts anderes angegeben ist.

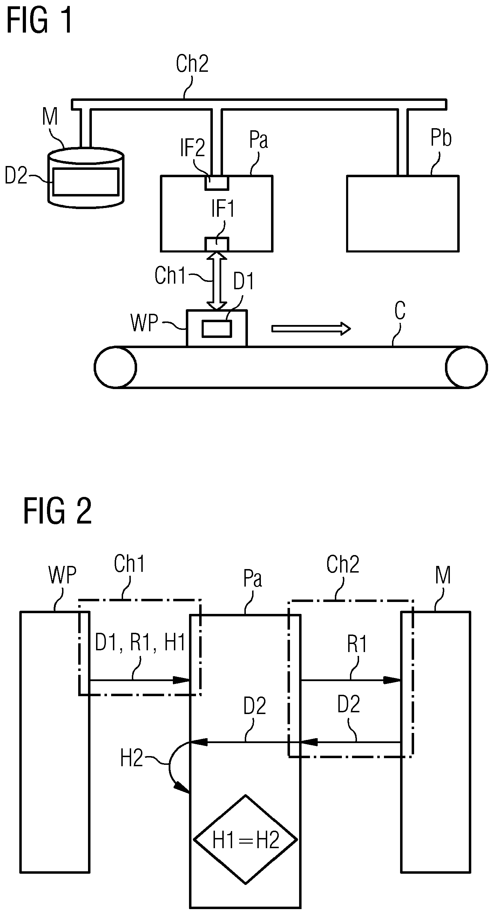

In Figur 1 ist schematisch das Durchlaufen mehrerer Fertigungsschritte durch ein Werkstück in einer automatisierten Fertigungsanlage gezeigt. Es handelt sich beispielsweise um eine Fertigungsstraße, bei welcher ein Werkstück WP je Fertigungseinheit Pa, Pb einen oder mehrere Produktionsschritte durchläuft. Beispielsweise handelt es sich um das Zusammenbauen mehrerer Komponenten oder um ein Veredeln des Werkstücks, oder ein Beschichten, oder um ein Umlagern auf einem Werkstückträger. Das Werkstück WP wird dabei beispielsweise mit Hilfe eines Förderbandes C in den Wirkungsbereich verschiedener Fertigungseinheiten Pa, Pb transportiert. Beispielsweise wird durch eine erste Fertigungseinheit Pa die Oberfläche des Werkstückes WP bearbeitet. Es handelt sich beispielsweise um eine Schleifmaschine. Bei der darauffolgenden Fertigungseinheit Pb handelt es sich beispielsweise um eine Maschine zum Auftragen einer Beschichtung oder zum Anbringen von Hilfsmitteln, wie Schrauben oder ähnlichem. Das Werkstück WP weist einen Speicher auf, welcher einen Referenzdatensatz D1 speichern kann. Es kann sich dabei beispielsweise um einen Barcode oder NFC-Chip handeln. Beispielsweise ist ein passiver Marker vorgesehen, bei welchem eine Energieversorgung von außen über eine Antenne erfolgt. Sobald dieser Chip in die Nähe eines Lesers der ersten Fertigungseinheit Pa gelangt, kann der erste Kommunikationskanal Ch1 zwischen Werkstück WP und Fertigungseinheit Pa benutzt werden. Über diesen ersten Kommunikationskanal Ch1, der also auf der Nähe des Werkstücks WP zu einer ersten Schnittstelle IF1 beruht, wird ein Referenzwert übertragen, welcher das Werkstück WP identifiziert. Der Referenzwert ist Teil des Referenzdatensatzes D1.

Über eine zweite Schnittstelle IF2 kann die Fertigungseinheit Pa den zweiten Kommunikationskanal nutzen. Insbesondere wird ein IT-Kommunikationsnetzwerk genutzt, über welches der Fertigungseinheit Pa Daten des digitalen Zwillings D2 des Werkstückes WP übermittelt werden. Das IT-Kommunikationsnetzwerk kann ferner zum Datenverkehr der verschiedenen Fertigungseinheiten Pa, Pb einer Fertigungsanlage untereinander sowie von Fertigungseinheiten mit Steuereinheiten vorgesehen sein. Insbesondere greift die Fertigungseinheit Pa über den zweiten Kommunikationskanal Ch2 auf Daten aus einem Speicher M eines Steuerungsrechners zu. Die Konsistenzprüfung erfolgt insbesondere auf einem auf der Fertigungseinheit vorgesehenen Prozessor oder auf einer separaten Einheit, die zugleich einen Zugriff der Fertigungseinheit auf Daten über den zweiten Kommunikationskanal Ch2 nur in Abhängigkeit vom Ergebnis der Konsistenzprüfung freigibt.

Figur 2 zeigt zu einer ersten Variante des Ausführungsbeispiels eine schematische Darstellung der über die verschiedenen Kommunikationskanäle übertragenen Daten. Die Reihenfolge der Datenübertragungsschritte ist jeweils von oben nach unten aufzufassen. Zunächst wird beispielsweise gemäß der ersten Variante als Referenzdatensatz D1 der Referenzwert R1 sowie eine Prüfsumme H1 über die Daten des digitalen Zwillings übertragen. Es handelt sich beispielsweise bei der Prüfsumme H1 um den Hash-Wert der Daten des digitalen Zwillings. Somit sind auf dem Werkstück WP die Daten des digitalen Zwillings D2 des Werkstücks WP, welche einen Fertigungsplan oder Konfigurationsparameter oder ähnliches enthalten, nicht in direkt zugänglicher Weise gespeichert, sondern lediglich durch eine Prüfsumme geschützt hinterlegt.

Die Fertigungseinheit Pa, welche das Werkstück WP beispielsweise auf Grundlage der Daten des digitalen Zwillings D2 weiterverarbeiten soll, verwendet den Referenzwert R1, um über einen zweiten Kommunikationskanal Ch2 beispielsweise von einer zentralen Steuerungseinheit oder einem Cloud-Service die Daten des digitalen Zwillings D2, die dort auf einem Speicher M hinterlegt sind, anzufordern. Die Daten des digitalen Zwillings D2 werden der Fertigungseinheit bereitgestellt und diese bildet auf Basis der digitalen Daten D2 eine zweite Prüfsumme H2. Unter Anwendung der gleichen Funktion für die Prüfsummenberechnung wie bei der Berechnung der ersten Prüfsumme H1 sollte so ein identischer Wert bei der Prüfsummenberechnung ermittelt werden, so dass sich H1=H2 ergibt. Dann besteht eine Konsistenz zwischen den Referenzdaten D1 und den Daten des digitalen Zwillings D2 und es kann eine Authentizität der über das IT-Kommunikationsnetzwerk erhaltenen angenommen werden. Ergibt sich eine abweichende Prüfsumme, so kann auf eine Veränderung der Daten des digitalen Zwillings D2 oder eine Veränderung der ersten Prüfsumme H1 oder eine fehlerhafte Referenz R1 geschlossen werden. In jedem Fall ist von einer Integrität der Daten des digitalen Zwillings nicht ohne weiteres auszugehen.

Je nach Wahrscheinlichkeit für Schwachstellen können nun Fehlerquellen oder Manipulationsangriffe auf die Fertigungsanlage gesucht werden. Insbesondere werden auf vorteilhafte Weise Angriffe erkannt, welche eine Manipulation der Daten des digitalen Zwillings D2 bewirken. Ebenso wird ein Austausch des Werkstücks WP oder eine Manipulation des Werkstücks WP erkannt, sofern die eindeutige Referenz nicht mehr zum digitalen Zwilling passt oder die Prüfsumme H1 zur Sicherung der digitalen Daten des Zwillings D2 ausgetauscht oder verändert wurde.

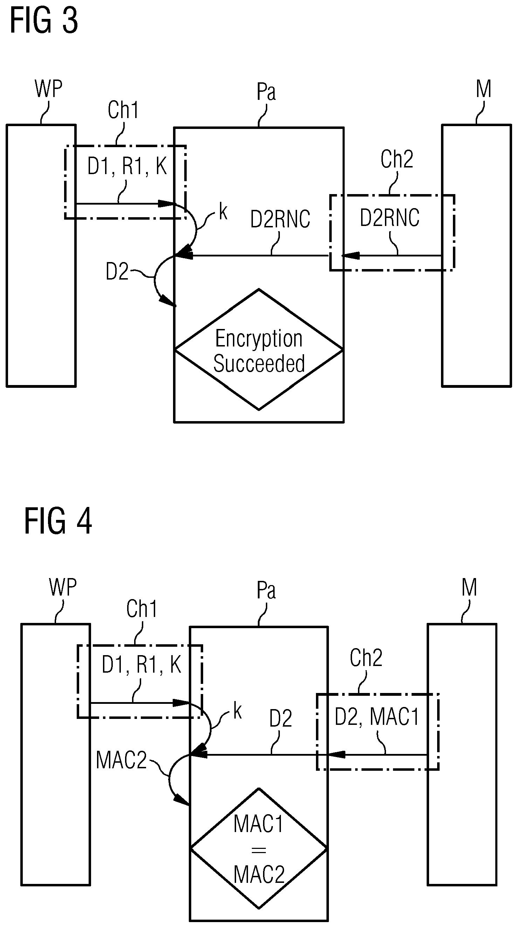

Gemäß einer zweiten Variante übermittelt das Werkstück WP mit dem Referenzdatensatz D1 einen Referenzwert R1 sowie kryptographisches Schlüsselmaterial K. Diese Variante ist in Figur 3 veranschaulicht. Es wird insbesondere direkt ein Schlüssel, beispielsweise ein symmetrischer Schlüssel, übermittelt. Die Fertigungseinheit Pa erhält gemäß dieser Variante Daten des digitalen Zwillings D2 in verschlüsselter Form D2ENC. Dies geschieht über den zweiten Kommunikationskanal Ch2. Somit werden gemäß dieser Variante zu keinem Zeitpunkt Daten des digitalen Zwillings D2 in unverschlüsselter Form auf einem der Kommunikationskanäle der Fertigungsanlage übermittelt. Insbesondere wird mittels des Referenzwertes der dazugehörige verschlüsselte Datensatz D2ENC angefordert. Alternativ sind insbesondere die Datensätze von potentiellen Fertigungsobjekten, d.h. deren Digital-Twin-Daten, in verschlüsselter Form bereits auf der Fertigungseinheit Pa vorhanden und mittels des Referenzwertes wird die spätere Konsistenzprüfung durchgeführt.

Es wird nun von der Fertigungseinheit Pa bzw. einem darauf befindlichen Prozessor ein Entschlüsselungsalgorithmus angewandt, um aus den entschlüsselten Daten D2ENC des digitalen Zwillings unter Anwendung des kryptographischen Schlüssels K die Daten des digitalen Zwillings D2 in unverschlüsselter Form zu erhalten. Ist die Entschlüsselung erfolgreich, was beispielsweise mittels des Referenzwertes R1 geprüft werden kann, so erfolgt eine Weiterverarbeitung der entschlüsselten Daten des digitalen Zwillings D2. Andernfalls wird beispielsweise eine Alarmmeldung von der Fertigungseinheit Pa ausgegeben, um eine Manipulation der auf dem Speicher M gespeicherten verschlüsselten Daten D2ENC des digitalen Zwillings oder eine Manipulation des Werkstückes WP zu melden.

Figur 4 veranschaulicht eine Alternative zur Variante in Figur 3, bei welcher ein Message Authentication Code MAC2 über den zweiten Kommunikationskanal Ch2 an die Fertigungseinheit Pa übertragen wird. Es handelt sich um eine mittels eines kryptographischen Schlüssels gebildete Prüfsumme über die Daten des digitalen Zwillings D2. Mittels des über den ersten Kommunikationskanal Ch1 empfangenen kryptographischen Schlüssel K wird ein zweiter Message Authentication Code MAC2 gebildet und dieser wird mit dem ersten Message Authentication Code MAC1 verglichen. Stimmen diese überein oder bis auf Übertragungsfehler überein, so liegt eine Konsistenz zwischen den Referenzdaten, inklusive des Schlüsselmaterials, und den Daten des digitalen Zwillings, mittels MAC geschützt, vor. Es kann daraus geschlossen werden, dass der über den ersten Kommunikationskanal Ch1 übertragene Referenzwert R1 sowie der kryptographische Schlüssel K von dem korrekten, zu dem digitalen Zwilling passenden Werkstück WP übermittelt wurden und nicht manipuliert wurden. Außerdem kann so sichergestellt werden, dass die Daten des digitalen Zwillings D2, welche beispielsweise auf einem Cloud-Server in unverschlüsselter Form gespeichert sind, seit Berechnen des Message Authentication Codes MAC1 nicht verändert wurden. Daher sollte die Berechnung in einer frühen, vertrauenswürdigen Phase erfolgen. Alternativ kann die Berechnung durch entsprechend autorisierte Entitäten zur Laufzeit erfolgen.

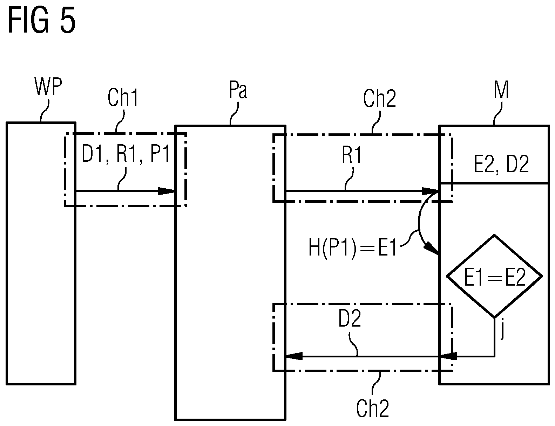

Bei einer vierten Variante, welche in Figur 5 veranschaulicht ist, wird über den ersten Kommunikationskanal neben dem Referenzwert R1 ein Eingangswert P1 oder ein sogenanntes Pre-Image übertragen. Es gilt, dass eine kryptographische Prüfsumme, beispielsweise eine Hash-Funktion, über den Eingangswert P1 das Ergebnis E1 liefert. Der Eingangswert P1 wird über den zweiten Kommunikationskanal Ch2 im Kommunikationsnetzwerk der Fertigungsanlage übermittelt, insbesondere an eine zentrale Steuerungseinheit mit Prozessor. Diese berechnet das Ergebnis E1 des Anwendens einer Hash-Funktion auf den Eingangswert P1. Die Fertigungseinheit Pa muss gegenüber einer Prüfeinheit in der Lage sein, den korrekten Eingangswert P1 vorzuweisen. Aufgrund der Einwegeigenschaft der Hash-Funktion ist dies nur möglich, wenn der Eingangswert P1 der Fertigungsanlage über den ersten Kommunikationskanal übermittelt wurde. Über den zweiten Kommunikationskanal ist der korrekte Eingangswert P1 hingegen nicht erhältlich. Insbesondere liegt innerhalb des Kommunikationsnetzwerkes lediglich ein Referenzergebnis E2 vor, mit welchem E1 übereinstimmen muss, damit die Daten des digitalen Zwillings D2 ebenfalls über den zweiten Kommunikationskanal auf die Fertigungseinheit Pa übertragen werden.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Prüfung einer Konsistenz zwischen Referenzdaten (D1) eines Fertigungsobjektes (WP) und Daten eines digitalen Zwillings (D2) des Fertigungsobjektes (WP), wobei die Referenzdaten (D1) über einen ersten Kommunikationskanal (Ch1) und die Daten des digitalen Zwillings (D2) über einen zweiten Kommunikationskanal (Ch2) übertragen werden, und wobei eine erste Übertragung über den ersten Kommunikationskanal (Ch1) an eine physische Nähe des Fertigungsobjektes (WP) innerhalb einer Fertigungsanlage gekoppelt ist und eine zweite Übertragung über den zweiten Kommunikationskanal (Ch2) an einen Zugriff auf ein Kommunikationsnetzwerk der Fertigungsanlage gekoppelt ist,
wobei als Referenzdaten (D1) neben einem Referenzwert zusätzlich eine erste Prüfsumme über die Daten des digitalen Zwillings (D2) übertragen wird und wobei eine zweite Prüfsumme über die über den zweiten Kommunikationskanal (Ch2) übertragenen Daten des digitalen Zwillings (D2) gebildet wird und die zweite Prüfsumme mit der ersten Prüfsumme verglichen und auf Konsistenz hin geprüft wird.

2. Verfahren nach Anspruch 1, wobei der erste Kommunikationskanal (Ch1) auf einer physischen Nähe beruht und insbesondere für ein optisches Kommunikationsverfahren oder für NahfeldKommunikationsverfahren ausgerichtet ist.

3. Verfahren nach Anspruch 1 oder 2, wobei der zweite Kommunikationskanal (Ch2) auf einer Kommunikationsinfrastruktur beruht, insbesondere auf einer Profibus oder Industrial Ethernet-Struktur.

4. Verfahren nach einem der vorstehenden Ansprüche, wobei als Referenzdaten (D1) neben einem Referenzwert zusätzlich ein symmetrischer Schlüssel oder Informationen zur Generierung eines symmetrischen Schlüssels übertragen werden und wobei die Daten des digitalen Zwillings (D2) in mit dem symmetrischen Schlüssel verschlüsselter Form gespeichert werden und mit dem symmetrischen Schlüssel entschlüsselbar sind.

5. Verfahren nach einem der vorstehenden Ansprüche, wobei als Referenzdaten (D1) neben einem Referenzwert zusätzlich ein symmetrischer Schlüssel oder Informationen zur Generierung eines symmetrischen Schlüssels übertragen wird und wobei neben den Daten des digitalen Zwillings (D2) zusätzlich ein erster Nachrichtenauthentifizierungscode über die Daten des digitalen Zwillings (D2) übertragen wird und wobei ein zweiter Nachrichtenauthentifizierungscode über die über den zweiten Kommunikationskanal (Ch2) übertragenen Daten des digitalen Zwillings (D2) mittels des symmetrischen Schlüssels gebildet wird und der erste Nachrichtenauthentifizierungscode mit dem zweiten Nachrichtenauthentifizierungscode verglichen und auf Konsistenz hin geprüft wird.

6. Verfahren nach Anspruch 4 oder 5, wobei die Informationen als Startwert ausgebildet sind geeignet zur Generierung des symmetrischen Schlüssels mittels einer Schlüsselableitungsfunktion.

7. Verfahren nach einem der Ansprüche 4 bis 6, wobei ein fertigungsobjektspezifischer Schlüssel oder fertigungsobjektspezifische Informationen durch Einbeziehen fertigungsobjektspezifischer Merkmale in eine Schlüsselableitungsfunktion bereitgestellt werden, wobei die fertigungsobjektspezifischen Merkmale insbesondere mittels des Referenzwertes oder mittels einer physikalisch unklonbaren Funktion erzeugt werden.

8. Verfahren nach einem der vorstehenden Ansprüche, wobei als Referenzdaten (D1) neben einem Referenzwert zusätzlich ein Eingangswert einer Einwegfunktion übertragen wird und wobei die Daten des digitalen Zwillings (D2) über den zweiten Kommunikationskanal (Ch2) übertragen werden, falls ein Ergebniswert der Einwegfunktion über den Eingangswert mit einem gespeicherten Ergebniswert übereinstimmt.

9. Computerprogrammprodukt mit einem Computerprogramm, das Mittel zur Durchführung des Verfahrens nach einem der Ansprüche 1 bis 8 aufweist, wenn das Computerprogramm auf einer programmgesteuerten Einrichtung zur Ausführung gebracht wird.

10. Fertigungseinheit (Pa) aufweisend
- eine erste Schnittstelle (IF1) zu einem Fertigungsobjekt (WP), wobei über die erste Schnittstelle (IF1) Referenzdaten (D1) des Fertigungsobjektes empfangbar sind, wobei eine erste Übertragung der Referenzdaten (D1) an eine physische Nähe zwischen Fertigungseinheit (Pa) und Fertigungsobjekt (WP) gekoppelt ist, sowie
- eine zweite Schnittstelle (IF2) zu einem Kommunikationsnetzwerk einer Fertigungsanlage, wobei über die zweite Schnittstelle (IF2) Daten eines digitalen Zwillings (D2) des Fertigungsobjektes (WP) empfangbar sind, wobei eine zweite Übertragung der Daten des digitalen Zwillings (D2) an einen Zugriff auf das Kommunikationsnetzwerk gekoppelt ist, sowie eine Prüfeinheit zum Prüfen einer Konsistenz zwischen Referenzdaten (D1) des Fertigungsobjektes (WP) und den Daten des digitalen Zwillings (D2) des Fertigungsobjektes (WP),
wobei als Referenzdaten (D1) neben einem Referenzwert zusätzlich eine erste Prüfsumme über die Daten des digitalen Zwillings (D2) übertragen wird und wobei eine zweite Prüfsumme über die über den zweiten Kommunikationskanal (Ch2) übertragenen Daten des digitalen Zwillings (D2) gebildet wird und die zweite Prüfsumme mit der ersten Prüfsumme verglichen und auf Konsistenz hin geprüft wird.

11. Fertigungseinheit nach Anspruch 10, wobei als Prüfeinheit ein Prozessor vorgesehen ist und der Prozessor in die Fertigungseinheit (Pa) integriert ist oder durch einen Cloud-Service bereitgestellt wird oder in eine Steuerungseinheit der Fertigungsanlage integriert ist, insbesondere gemeinsam mit einer Speichereinheit (M) zur Speicherung der Daten des digitalen Zwillings (D2).

12. Anordnung aus Fertigungsobjekt (WP), Fertigungseinheit (Pa), Speichereinheit (M) und Prozessor, mit einem ersten Kommunikationskanal (Ch1) zwischen Fertigungsobjekt (WP) und Fertigungseinheit (Pa) beruhend auf einer physischen Nähe zwischen Fertigungseinheit (Pa) und Fertigungsobjekt (WP) zur Übertragung von Referenzdaten (D1) des Fertigungsobjektes (WP) und mit einem zweiten Kommunikationskanal (Ch2) eines Kommunikationsnetzwerkes zwischen Fertigungseinheit (Pa) und Speichereinheit (M) zur Übertragung von Daten eines digitalen Zwillings (D2) des Fertigungsobjektes (WP), wobei der Prozessor geeignet ist zur Prüfung einer Konsistenz zwischen den Referenzdaten (D1) und den Daten des digitalen Zwillings (D2),
wobei als Referenzdaten (D1) neben einem Referenzwert zusätzlich eine erste Prüfsumme über die Daten des digitalen Zwillings (D2) übertragen wird und wobei eine zweite Prüfsumme über die über den zweiten Kommunikationskanal (Ch2) übertragenen Daten des digitalen Zwillings (D2) gebildet wird und die zweite Prüfsumme mit der ersten Prüfsumme verglichen und auf Konsistenz hin geprüft wird.

13. Anordnung nach Anspruch 12, wobei der Prozessor in die Fertigungseinheit (Pa) integriert ist oder durch einen Cloud-Service bereitgestellt wird oder in eine Steuerungseinheit einer Fertigungsanlage integriert ist, insbesondere gemeinsam mit der Speichereinheit (M).

## Claims

1. Method for examining a consistency between reference data (D1) of a production object (WP) and data of a digital twin (D2) of the production object (WP), wherein the reference data (D1) are transmitted over a first communication channel (Ch1) and the data of the digital twin (D2) over a second communication channel (Ch2), and wherein an initial transmission over the first communication channel (Ch1) is linked to a physical proximity of the production object (WP) within a manufacturing plant and a second transmission over the second communication channel (Ch2) is linked to an access to a communication network of the manufacturing plant,
wherein in addition to a reference value, a first checksum over the data of the digital twin (D2) is also transmitted as reference data (D1), and wherein a second checksum is formed over the data of the digital twin (D2) transmitted over the second communication channel (Ch2), and the second checksum is compared with the first checksum and examined for consistency.

2. Method according to Claim 1,
wherein the first communication channel (Ch1) is based on a physical proximity and is oriented, in particular, toward an optical communication procedure or for near-field communication procedures.

3. Method according to Claim 1 or 2,
wherein the second communication channel (Ch2) is based on a communication infrastructure, in particular on a Profibus or Industrial Ethernet structure.

4. Method according to any one of the previous claims,
wherein as reference data (D1), in addition to a reference value a symmetric key or information on how to generate a symmetric key is also transmitted, and wherein the data of the digital twin (D2) are stored in a form that is encrypted with a symmetric key and can be decrypted with the symmetric key.

5. Method according to any one of the previous claims,
wherein as reference data (D1), in addition to a reference value, a symmetric key or information on how to generate a symmetric key is also transmitted and wherein, in addition to the data of the digital twin (D2) a first message authentication code for the data of the digital twin (D2) is additionally transmitted, and wherein a second message authentication code for the data of the digital twin (D2) transmitted over the second communication channel (Ch2) is formed by means of the symmetric key and the first message authentication code is compared with the second message authentication code and examined for consistency.

6. Method according to Claim 4 or 5,
wherein the information is configured as an input value, suitable for generating the symmetric key using a key derivation function.

7. Method according to one of Claims 4 to 6,
wherein a production-object-specific key or production-object-specific information are provided by incorporating production-object-specific characteristics into a key derivation function, wherein the production-object-specific characteristics are generated in particular by means of the reference value or by means of a physically unclonable function.

8. Method according to any one of the previous claims,
wherein in addition to a reference value, an input value of a one-way function is also transmitted as reference data (D1), and wherein the data of the digital twin (D2) are transmitted over the second communication channel (Ch2) if a resulting value of the one-way function over the input value agrees with a stored resulting value.

9. Computer program product with a computer program, which has means for carrying out the method according to any one of Claims 1 to 8, if the computer program is executed on a program-controlled device.

10. Production unit (Pa) having
- a first interface (IF1) to a production object (WP), wherein reference data (D1) of the production object can be received over the first interface (IF1), wherein an initial transmission of the reference data (D1) is linked to a physical proximity between the production unit (Pa) and production object (WP), and
- a second interface (IF2) to a communication network of a manufacturing plant, wherein data from a digital twin (D2) of the production object (WP) are received over the second interface (IF2), wherein a second transmission of the data from the digital twin (D2) is linked to an access to the communication network, and an examination unit for examining a consistency between reference data (D1) of the production object (WP) and the data of the digital twin (D2) of the production object (WP),
wherein in addition to a reference value, a first checksum over the data of the digital twin (D2) is also transmitted as reference data (D1), and wherein a second checksum is formed over the data of the digital twin (D2) transmitted over the second communication channel (Ch2), and the second checksum is compared with the first checksum and examined for consistency.

11. Production unit according to Claim 10,
wherein a processor is provided as an examination unit and the processor is integrated into the production unit (Pa) or is provided by a cloud service, or is integrated into a control unit of the manufacturing plant, in particular together with a memory unit (M) for storing the data of the digital twin (D2).

12. Arrangement consisting of a production object (WP), production unit (Pa), memory unit (M) and processor, having a first communication channel (Ch1) between production object (WP) and production unit (Pa) based on a physical proximity between production unit (Pa) and production object (WP) for the transmission of reference data (D1) of the production object (WP) and having a second communication channel (Ch2) of a communication network between production unit (Pa) and memory unit (M) for the transmission of data from a digital twin (D2) of the production object (WP), wherein the processor is suitable for examining a consistency between the reference data (D1) and the data of the digital twin (D2),
wherein in addition to a reference value, a first checksum over the data of the digital twin (D2) is also transmitted as reference data (D1), and wherein a second checksum is formed over the data of the digital twin (D2) transmitted over the second communication channel (Ch2), and the second checksum is compared with the first checksum and examined for consistency.

13. Arrangement according to Claim 12,
wherein the processor is integrated into the production unit (Pa) or is provided by a cloud service or is integrated into a control unit of a manufacturing plant, in particular, jointly with the memory unit (M).

## Revendications

1. Procédé de vérification d'une cohérence entre des données de référence (D1) d'un objet de fabrication (WP) et des données d'un jumeau numérique (D2) de l'objet de fabrication (WP), les données de référence (D1) étant transmises sur un premier canal de communication (Ch1) et les données du jumeau numérique (D2) étant transmises sur un deuxième canal de communication (Ch2), et une première transmission étant, via le premier canal de communication (Ch1), couplée à une proximité physique de l'objet de fabrication (WP) dans une installation de fabrication et une deuxième transmission étant, via le deuxième canal de communication (Ch2), couplée à un accès à un réseau de communication de l'installation de fabrication, outre une valeur de référence étant additionnellement transmise, en tant que données de référence (D1), une première somme de contrôle portant sur les données du jumeau numérique (D2) et une deuxième somme de contrôle portant sur les données du jumeau numérique (D2) transmises via le deuxième canal de communication (Ch2) étant formée et la deuxième somme de contrôle étant comparée à la première somme de contrôle et vérifiée quant à la cohérence.

2. Procédé selon la revendication 1, le premier canal de communication (Ch1) reposant sur une proximité physique et étant plus particulièrement conçu pour un procédé de communication optique ou pour un procédé de communication en champ proche.

3. Procédé selon la revendication 1 ou 2, le deuxième canal de communication (Ch2) reposant sur une infrastructure de communication, et plus particulièrement sur une structure Profibus ou Industrial Ethernet.

4. Procédé selon l'une des revendications précédentes, outre une valeur de référence étant additionnellement transmise, en tant que données de référence (D1), une clé symétrique ou des informations pour générer une clé symétrique et les données du jumeau numérique (D2) étant sauvegardées sous forme cryptée au moyen de la clé symétrique et pouvant être décryptées au moyen de la clé symétrique.

5. Procédé selon l'une des revendications précédentes, outre une valeur de référence étant additionnellement transmises, en tant que données de référence (D1), une clé symétrique ou des informations pour générer une clé symétrique et, outre les données du jumeau numérique (D2) étant additionnellement transmis un premier code d'identification de message portant sur les données du jumeau numérique (D2) et un deuxième code d'identification de message portant sur les données du jumeau numérique (D2) transmises via le deuxième canal de communication (Ch2) étant formé au moyen de la clé symétrique et le premier code d'identification de message étant comparé au deuxième code d'identification de message et vérifié quant à la cohérence.

6. Procédé selon la revendication 4 ou 5, les informations étant réalisées, en tant que valeur de départ, telles qu'adaptées pour générer la clé symétrique au moyen d'une fonction de dérivation de clé.

7. Procédé selon l'une des revendications 4 à 6, une clé spécifique à l'objet de fabrication ou des informations spécifiques à l'objet de fabrication étant fournies par intégration de caractéristiques spécifiques à l'objet de fabrication dans une fonction de dérivation de clé, les caractéristiques spécifiques à l'objet de fabrication étant générées en particulier au moyen de la valeur de référence ou au moyen d'une fonction physiquement non clonable.

8. Procédé selon l'une des revendications précédentes, outre une valeur de référence étant additionnellement transmise, en tant que données de référence (D1), une valeur d'entrée d'une fonction à sens unique et les données du jumeau numérique (D2) étant transmises via le deuxième canal de communication (Ch2) au cas où une valeur de résultat de la fonction à sens unique portant sur la valeur d'entrée coïncide avec une valeur de résultat sauvegardée.

9. Produit de programme informatique comportant un programme informatique qui présente des moyens pour exécuter le procédé selon l'une des revendications 1 à 8 lorsqu'on fait exécuter le programme informatique sur un dispositif commandé par programme.

10. Unité de fabrication (Pa) comportant :
- une première interface (IF1) vers un objet de fabrication (WP), des données de référence (D1) de l'objet de fabrication pouvant être reçues via la première interface (IF1), une première transmission des données de référence (D1) étant couplée à une proximité physique entre l'unité de fabrication (Pa) et l'objet de fabrication (WP), et
- une deuxième interface (IF2) vers un réseau de communication d'une installation de fabrication, des données d'un jumeau numérique (D2) de l'objet de fabrication (WP) pouvant être reçues via la deuxième interface (IF2), une deuxième transmission des données du jumeau numérique (D2) étant couplée à un accès au réseau de communication, ainsi qu'une unité de contrôle pour vérifier une cohérence entre des données de référence (D1) de l'objet de fabrication (WP) et les données du jumeau numérique (D2) de l'objet de fabrication (WP),
outre une valeur de référence étant additionnellement transmise, en tant que données de référence (D1), une première somme de contrôle portant sur les données du jumeau numérique (D2), et une deuxième somme de contrôle portant sur les données du jumeau numérique (D2) transmises via le deuxième canal de communication (Ch2) étant formée et la deuxième somme de contrôle étant comparée à la première somme de contrôle et vérifiée quant à la cohérence.

11. Unité de fabrication selon la revendication 10, un processeur étant prévu en tant qu'unité de contrôle et le processeur étant intégré à l'unité de fabrication (Pa) ou fourni par un Cloud Service ou intégré à une unité de commande de l'installation de fabrication, en particulier conjointement avec une unité de mémoire (M) pour sauvegarder les données du jumeau numérique (D2).

12. Ensemble formé de l'objet de fabrication (WP), unité de fabrication (Pa), de l'unité de mémoire (M) et du processeur, avec un premier canal de communication (Ch1) entre l'objet de fabrication (WP) et l'unité de fabrication (Pa) sur la base d'une proximité physique entre l'unité de fabrication (Pa) et l'objet de fabrication (WP) pour la transmission de données de référence (D1) de l'objet de fabrication (WP), et avec un deuxième canal de communication (Ch2) d'un réseau de communication entre l'unité de fabrication (Pa) et l'unité de mémoire (M) pour la transmission de données d'un jumeau numérique (D2) de l'objet de fabrication (WP), le processeur étant adapté pour vérifier une cohérence entre les données de référence (D1) et les données du jumeau numérique (D2),
outre une valeur de référence étant additionnellement transmise, en tant que données de référence (D1), une première somme de contrôle portant sur les données du jumeau numérique (D2), et une deuxième somme de contrôle portant sur les données du jumeau numérique (D2) transmises via le deuxième canal de communication (Ch2) étant formée et la deuxième somme de contrôle étant comparée à la première somme de contrôle et vérifiée quant à la cohérence.

13. Ensemble selon la revendication 12, le processeur étant intégré à l'unité de fabrication (Pa) ou fourni par un Cloud Service ou étant intégré à une unité de commande d'une installation de fabrication, en particulier conjointement avec l'unité de mémoire (M).
